# EUROPEAN PATENT APPLICATION

(11) **EP 0 671 602 A2**
(43) Date of publication of application: **13.09.1995**
(21) Application number: 95102464.5
(22) Date of filing: 22.02.1995
(51) Int. Cl.: G01B 21/04

(54) **Method and apparatus for transfer and setup of a mechanically correct positional relationship for a jig or transfer setup tool**

(30) Priority: 01.03.1994 US 203648
(71) Applicant: FARO TECHNOLOGIES INC., Lake Mary, Florida 32746-6204 (US)
(72) Inventor: Raab, Simon, Longwood, Florida 32779 (US)
(74) Representative: Freylinger, Ernest T.

(57) **Abstract**

A method and apparatus for transfer and setup of a mechanically correct positional relationship for a jig or transfer setup tool (30), using a portable coordinate measuring machine (10) is presented. The coordinate measuring machine (10) comprises a multijointed manually positionable measuring arm (12) for accurately and easily measuring a plurality of setup points or markers (82-88) on the jig or transfer setup tool (30). Once a properly configured transfer has been modified to include markers, a master or reference file of the markers is established. The base marker positions (60-64) are sequentially digitized. These digitized base markers are stored in computer memory and used to establish a master coordinate system. Once digitization of all the markers on the base is completed the positions of the markers (82-88) on the transfer are measured. The positions of the transfer markers relative to the base markers are used to provide a master or reference file for the transfer. In the event that a transfer losses positioning during a production run, the transfer simply needs to be removed and mounted to the reference base (34). The appropriate reference file is selected and the user then systematically checks each marker position on the base (34) and transfer (30). The screen graphically demonstrates alignment for the transfer markers. Transfer markers which are out of alignment are readjusted or repaired and then confirmed using the above method. Once repaired or adjusted, the transfer may be returned to the production line.

## Description

This invention relates generally to a method and apparatus for transfer and setup of a mechanically correct positional relationship for a jig or transfer setup tool.

Transfers are devices constructed in a wide variety of formats geared to assisting in the transfer of sheet metal production facility. The proper positioning of the sheet metal parts as they are transferred from one die to the next is critical to the accuracy of the final assembly. Incorrect orientations of the transfer of the sheet metal component to subsequent dies may cause the subsequent die operation to be misaligned with respect to the previous, hence, causing specific geometric deficiencies in the finished part.

In standard sheet metal assembly, transfers are optimized, the production run occurs and then transfers are removed for storage until the next production run for that sheet metal series. During the process of production, as well as the storage period, transfers may be altered from their previously established optimum position. Setup problems and the time required for optimization make the changeover process and the maintenance process extremely costly in terms of man-hours and scrapped parts. Transfers are created for a particular production run. These transfers are optimized through standard trial and error process. Each transfer is generally identified by a specific serial number.

Further, it will be appreciated that everything in the physical world occupies volume or space. Position in a space may be defined by length, width and height which, in engineering terms, is often called an X, Y, Z coordinate. The X, Y, Z numbers represent the dimensions of length, width and height or three dimensions. Three-dimensional objects are described in terms of position and orientation, that is, not just where an object is but in what direction it points. The orientation of an object in space can be defined by the position of three points on the object. Orientation can also be described by the angles of alignment of the object in space. The X, Y and Z coordinates can be most simply measured by three linear scales. In other words, if you lay a scale along the length, width and height of a space, you can measure the position of a point in the space.

A problem underlying the present the present invention is to provide a method and apparatus for transfer and setup of a mechanically correct positional relationship for a jig or transfer setup tool.

Therefore, the present invention provides a method of establishing a repeatable reference of mechanical positional relationship of components of a setup tool using a dimensional coordinate measuring system having a probe for digitizing coordinates, the method comprising the steps of
· modifying said setup tool to provide a plurality of setup tool marker positions on said components of said setup tool,
· mounting said modified setup toolto a reference base having a plurality of base marker positions thereon,
· probing said reference base marker positions using said probe to provide a plurality of digitized base coordinates each corresponding to one of said base marker positions, said digitized base coordinates defining a reference coordinate system, and
· probing said setup tool marker positions using said probe to provide a plurality of digitized setup tool coordinates each corresponding to one of said setup tool marker positions, said digitized setup tool coordinates being defined relative to said reference coordinate system whereby said repeatable reference of mechanical positional relationship of components of said setup tool is established.

A portable coordinate measuring machine comprising a multijointed (preferably six joints) manually positionable measuring arm may be used for accurately and easily measuring a plurality of setup points or markers on the jig or transfer setup tool.

Accurate documentation of the position of multiple components of a transfer is determined. Normally, once a transfer is optimized on the production line, it may be stored between usages which may alter its relative positioning or it may be damaged during production. The digitizer, base and modified transfer of the present invention can then be used to reset the transfer to its original position and orientation prior to reinstallation into the production line. Accordingly, the present invention provides for documentation of original optimized position and re-establishment of original position after storage prior to reinstallation or after damage.

Once a properly configured transfer has been modified to include markers, a master or reference file of the markers is established. The base marker positions are sequentially digitized. These digitized base markers are stored in the computer memory and used to establish a master coordinate system. Once digitization of all the markers on the base is completed, the positions of the markers on the transfer are measured. A typical transfer may have as many as thirty holes defining its entire setup. The position of the transfer markers relative to the base markers is used to provide a master or reference file for the transfer. This is preferably a standard CL formatted digitization file which is labeled with the part serial number and each digitized point is labeled with a mark indicating its identifying number. The CL file is a "fingerprint" file defining the optimized position and orientation of all the components of the transfer.

The above steps are repeated for each of the other transfers in this particular production run. This will generate a library of fingerprint files for a particular production run.

In the event that a transfer losses positioning during the production run, the transfer simply needs to be removed and mounted to the reference base. The appropriate CL position file, i.e. that with the correct serial number is selected. A build mode is selected from a menu on the computer screen. The user then systematically checks each marker position on the base and transfer. Therefore, the present invention provides a method of verifying mechanical positional relationship of components of a setup tool using a dimensional coordinate measuring system having a probe for digitizing coordinates, said setup tool having a plurality of setup tool marker positions on components of said setup tool, the method comprising the steps of
· mounting said setup tool to a reference base having a plurality of base marker positions thereon,
· probing said reference base marker positions using said probe to provide a plurality of digitized base coordinates each corresponding to one of said base marker positions, said digitized base coordinates orientated to a reference coordinate system,
· probing each of said setup tool marker positions using said probe to provide a digitized setup tool coordinate for each of said setup tool marker positions, and
· comparing each of said digitized setup tool coordinates to a corresponding reference setup tool coordinate whereby mechanical positional relationship of components of said setup tool are verified.

The screen graphically demonstrates alignment for the transfer markers. Transfer markers which are out of alignment may simply be readjusted and confirmed using the build mode software. Once repaired or adjusted, the transfer may be returned to the production line. Prior to the reinstallation of a set of transfers or when re-establishing a production run after a change over, each transfer may be systematically taken from storage and checked as described above prior to installation on the production line.

According to a further aspect of the invention, there is provided an apparatus for determining mechanical positional relationships characterized by
· a setup tool (30) having a plurality of components (70-76) for which mechanical positional relationships are to be determined, each of said components (70-76) having a setup tool marker (82-88) thereon,
· a reference base (34) having a plurality of base markers (60-64) thereon, said setup tool (30) disposed on said reference base, and
· a dimensional coordinate measuring system position relative to said setup tool (30) and said reference base, said dimensional coordinate measuring system (10) having a probe (92) for measuring said setup tool markers and said base markers.

The above-discussed and other features and advantages of the present invention will be appreciated and understood by those skilled in the art from the following detailed description and drawings.

Referring to the drawings, wherein like elements are numbered alike in the several FIGURES.
FIGURE 1 is a side diagrammatic view depicting the three dimensional measuring system including a coordinate measuring machine, a controller box and a host computer,
FIGURE 2 is a perspective view of a base having a modified transfer mounted thereto in accordance with the present invention,
FIGURE 3 is a perspective view of the system of FIGURE 1 used with the base and transfer of FIGURE 2 in accordance with a method of the present invention, and
FIGURE 4 is a perspective view of the system of FIGURE 1 used with the base and transfer of FIGURE 2 in accordance with a method of the present invention.

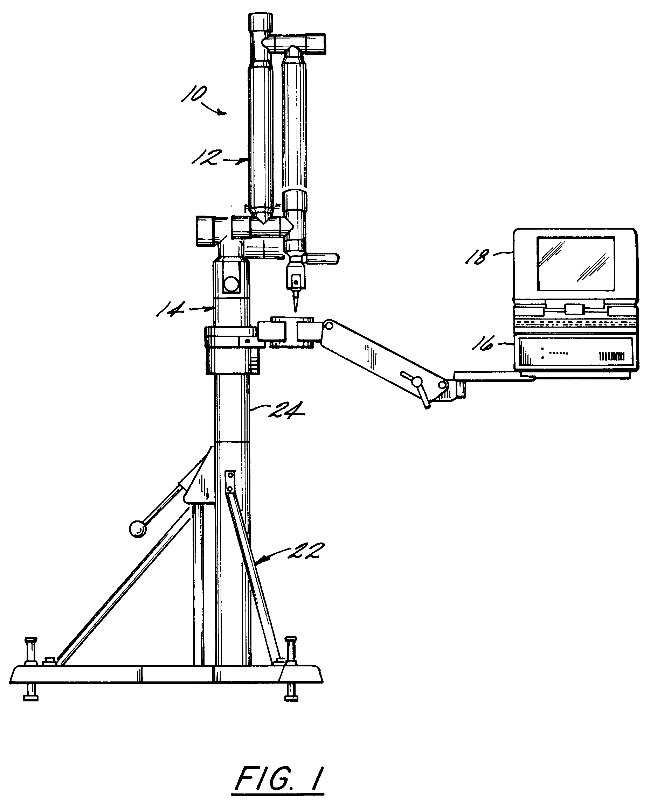

Referring first to FIGURE 1, a three dimensional measuring system for use in the present invention generally comprises a coordinate measuring machine (CMM) 10 composed of a manually operated multijointed arm 12 and a support base or post 14, a controller or serial box 16 and a host computer 18. It will be appreciated that CMM 10 communicates with host computer 18.

CMM 10 includes transducers (e.g. one transducer for each degree of freedom) which gather rotational positioning data and forward this basic data to serial box 16. Serial box 16 provides a reduction in the overall requirements of host computer 18 to handle certain complex calculations and provides certain preliminary data manipulations. Basic transducer data is sent from CMM 10 to serial box 16. Serial box 16 then processes the raw transducer data on an ongoing basis and responds to the queries of the host computer with the desired three-dimensional positional or orientational information.

Preferably, all three components defining the three dimensional measuring system of this invention (e.g. CMM 10, serial box 16 and host computer 18) are mounted on either a fixed mounting surface using a rigid plate and/or a standard optical measurement instrument thread followed by mounting on a known and standard theodolite mobile stand, such as part no. MWS750 manufactured by Brunson. Such a mobile stand is characterized by a stable rolling platform with an extendible vertical tower and with common attachments and locking mechanisms.

While the above generally describes the coordinate measuring machine disclosed USSN 08/021,949 corresponding to the French patent application No 9 401 663, such a high accuracy measuring device may, in some applications, not be required. In such applications the aforementioned METRECOM MODEL: IND-01 Coordinate Measuring Machine commercially available from FARO Technologies, Inc., Industrial Division, 125 Technology Park, Lake Mary, Florida 32746 may be employed. The METRECOM system performs the same functions as the above described system, however with reduced accuracy and at a reduced cost.

A CMM (e.g., as described above with reference to the French patent application No 9 401 663 or the METRECOM Model: IND-01) is used to measure markers on a modified transfer as discussed below.

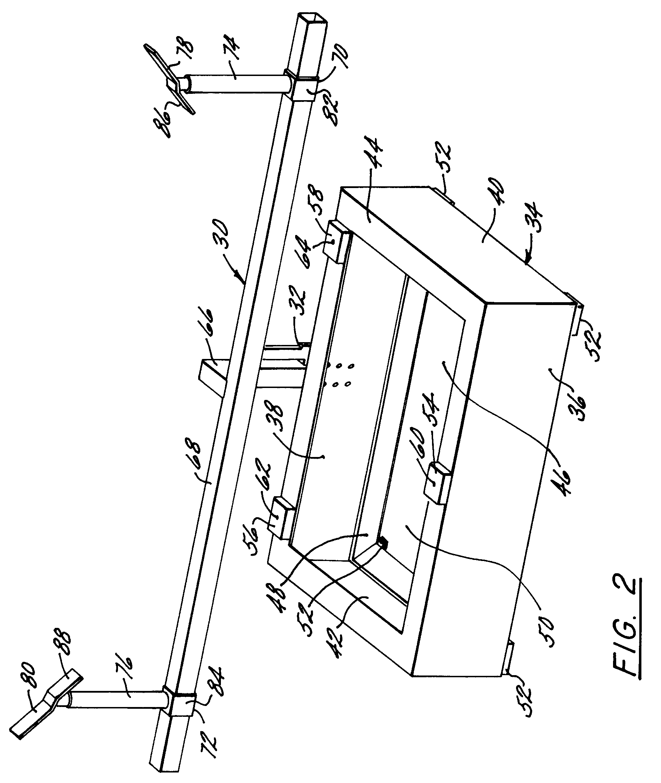

Referring to FIGURE 2, a transfer, jig or other setup tool 30 is shown mounted in a standard mounting bracket (or block) 32 which is mounted to a setup base 34 by any known means (e.g., nuts and bolts, welding or other mechanical fasteners). A jig herein includes any multiple part assembly tool. Base 34 provides a repeatable gauge or orientation from which transfer 30 can be setup and verified. Base 34 comprises front, rear and side panels 36, 38, 40 and 42 respectively connected to define an enclosure. Base 34 further comprises an upper panel 44 having an opening 46 and a lower panel 48 having an opening 50. Lower panel 48 has four legs or feet 52 attached at about the four corners thereof. Three plates 54, 56 and 58 are mounted on upper panel 44. Plate 54 is mounted on panel 44 adjacent front panel 36 at about the longitudinal center thereof. Mounting bracket 32 is mounted on rear panel 38 adjacent upper panel 44 at about the longitudinal center thereof and in alignment with plate 54. Plates 56 and 58 are mounted on panel 44 adjacent rear panel 38, with plate 56 being near side panel 42 and plate 58 being near side panel 40. Each plate 54, 56 and 58 has a generally centrally located detent or hole 60, 62 and 64 respectively. Holes 60, 62 and 64 may be drilled, stamped or otherwise formed in the plates. Further, these holes in the present example are .200 inches (≈0.5 mm) in diameter, since the probe of the above-described CMM has a diameter of .250 inches (≈0.63 mm). It will be appreciated that the marker holes diameter will be sized in accordance with the probe diameter and that the above is only exemplary.

Transfer 30 may comprise any type of transfer, jig or other setup tool which establishes positioning of a work piece. In this example transfer 30 comprises a sheet metal transfer. Transfer 30 has an inverted L-shaped portion 66 which is connected at one end thereof to about the center of a beam portion 68. The other end of portion 66 is secured in standard mounting block or bracket 32 (of the same type employed on the machinery to which the transfer is mounted during normal production). Beam 68 near each end thereof has an adjustable bracket 70, 72 disposed thereon. Height adjustable members 74, 76 are mounted at one end thereof to brackets 70, 72, respectively, and extend upwardly therefrom. Each member 74, 76 has a guide piece 78, 80, respectively, mounted at the other end thereof. The above description of a transfer is intended to describe a standard known type transfer which is to be modified as described below.

Transfer 30 is modified by adding a plurality of markers. These markers are preferably positioned near each adjustment component and at a position farthest from the axis of rotation of axially rotated parts. Accordingly, it will be appreciated that the location and the number of markers will be determined for each transfer individually and is not limited to the following example. Transfer 30 in this example has four markers (i.e. detents or holes) 82, 84, 86 and 88. Markers 82 and 84 are centered at the front sides of brackets 70 and 72 respectively. Markers 86 and 88 are laterally centered near one end of guide pieces 78 and 80 respectively. Each hole 82, 84, 86 and 88 may be drilled, stamped or otherwise formed in the plates. Further, these holes in the present examples are .200 inches (≈0.5 mm) in diameter, since the probe of the abovedescribed CMM has a diameter of .250 inches (≈0.63 mm). It will be appreciated that the markers holes diameter will be sized in accordance with the probe diameter and that the above is only exemplary. The sequence or order in which these markers are probed is extremely important as it represents a positioning dependency.

Accordingly, each of the holes (i.e., markers) in base 34 and transfer (or tooling) 30 is stamped or otherwise marked with a number. By way of example, marker 60 is designated B1, marker 62 is designated B2 and marker 64 is designated B3. It will be appreciated that the marker positions on the base are selected to preferably reach across the widest points of the base. The transfer's markers are sequentially designated 1-4, which corresponds to holes 82, 84, 86 and 88 respectively. The numbering or designation for a transfer tool shall originate at the adjustment component closest to the base and increasing for each position hole out along the various attachments and guides.

In accordance with the present invention, accurate documentation of the position of multiple components of a transfer is determined. Normally, once a transfer is optimized on the production line, it may be stored between usages which may alter its relative positioning or it may be damaged during production. The digitizer, base and modified transfer of the present invention can then be used to reset the transfer to its original position and orientation prior to reinstallation into the production line. Accordingly, the present invention provides for documentation or original optimized position and re-establishment or original position after storage prior to reinstallation or after damage.

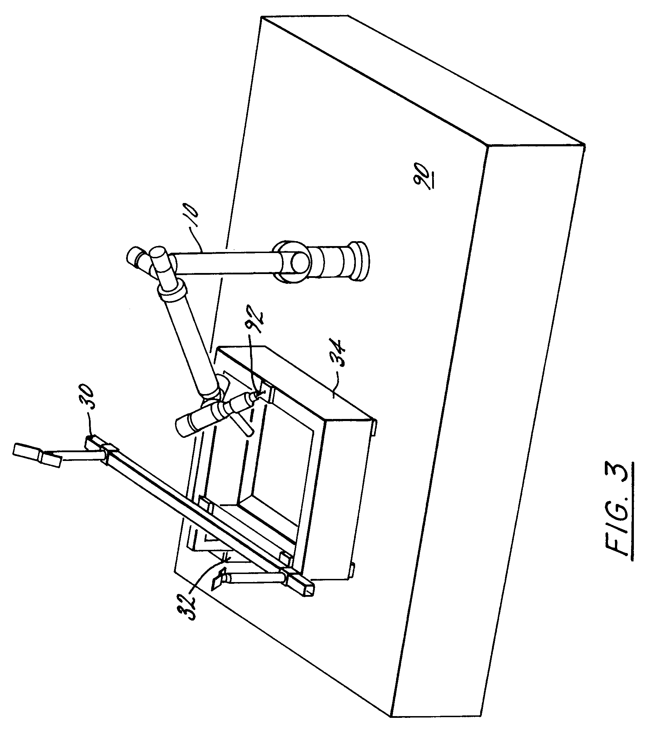

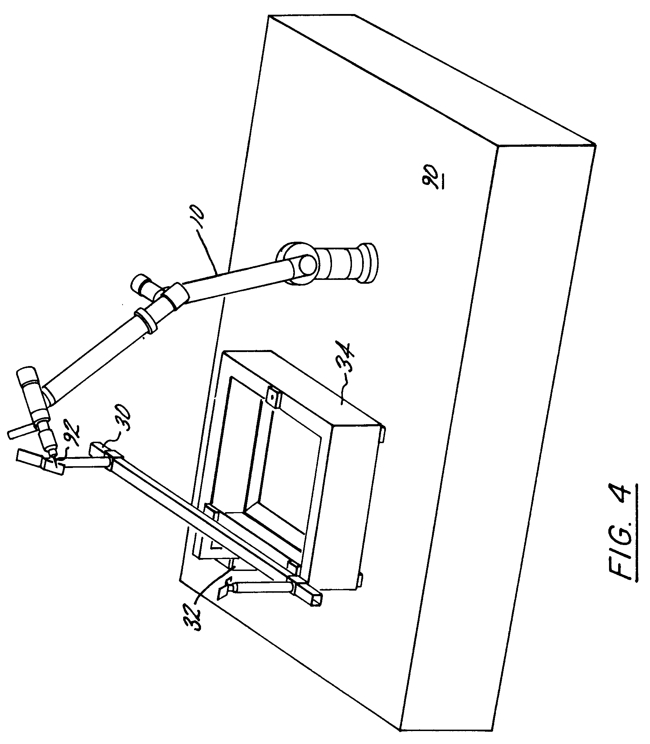

Once a properly configured transfer has been modified as described above, a master or reference file of the markers is established as follows. Referring to FIGURE 3, CMM 10 is mounted on a level surface 90. Base 34 is positioned on surface 90 within reach of CMM 10, with a transfer 30 mounted in bracket 32 of base 34. The probe 92 of CMM 10 is used to digitize the position of marker B1 (as is shown in FIGURE 3). Thereafter, the positions of B2 and B3 are digitized. It will be appreciated that all of the markers on the base are sequentially digitized. These sequentially digitized base markers are stored in the computer memory and used to establish a master coordinate system. Once digitization of all the markers on the base is completed the positions of the markers on the transfer are measured. A typical transfer may have as many as thirty holes defining its entire setup. In this example, transfer 30 has four markers 1-4, the locations of which are sequentially digitized (as is shown in FIGURE 4) and stored in computer memory. The position of the transfer markers relative to the base markers are used to provide a master or reference file for the transfer. This is preferably a standard CL formatted digitization file which is labeled with the part serial number and each digitized point is labeled with a mark indicating its identifying number, as described above. The CL file is a "fingerprint" file defining the optimized position and orientation of all the components of the transfer.

The above steps are repeated for each of the other transfers in this particular production run. This will generate a library of fingerprint files for a particular production run.

In the event that a transfer losses positioning during the production run, the transfer simply needs to be removed and mounted to base 34. The appropriate CL position file, i.e. that with the correct serial number is selected. A build mode is selected from a menu on the computer screen. The user then systematically checks the position of each of the position indicator holes (i.e., markers) on the base and transfer. The screen graphically demonstrates alignment for the transfer markers. Position indicator holes (i.e. transfer markers) which are out of alignment may simply be readjusted and confirmed using the build mode software. Once repaired or adjusted, the transfer may be returned to the production line. It should be noted that various position indicator holes may require different tolerances. Tolerance can be set as required to meet either the more loose or more stringent requirements of a particular production run.

Prior to the reinstallation of a set of transfers or when re-establishing a production run after a change over, each transfer may be systematically taken from storage and checked as described above prior to installation on the production line.

While the markers herein have been described as holes, the markers may comprise tooling balls or any other mechanical location indicator. It will be appreciated that the probe will be selected to measure the appropriate marker feature and is not intended to be limited to the embodiment illustrated herein as such is only exemplary.

## Claims

1. A method of establishing a repeatable reference of mechanical positional relationship of components (70-76) of a setup tool (30) using a dimensional coordinate measuring system (10) having a probe (92) for digitizing coordinates, **characterized by** the steps of
modifying said setup tool (30) to provide a plurality of setup tool marker positions (82-88) on said components (70-76) of said setup tool (30),
mounting said modified setup tool (30) to a reference base (34) having a plurality of base marker positions (60-64) thereon,
probing said reference base marker positions (60-64) using said probe (92) to provide a plurality of digitized base coordinates each corresponding to one of said base marker positions (60-64), said digitized base coordinates defining a reference coordinate system, and
probing said setup tool marker positions (82-88) using said probe (92) to provide a plurality of digitized setup tool coordinates each corresponding to one of said setup tool marker positions (82-88), said digitized setup tool coordinates being defined relative to said reference coordinate system whereby said repeatable reference of mechanical positional relationship of components (70-76) of said setup tool (30) is established.

2. A method of verifying mechanical positional relationship of components (70-76) of a setup tool (30) using a dimensional coordinate measuring system (10) having a probe (92) for digitizing coordinates, said setup tool (30) having a plurality of setup tool marker positions (82-88) on components (70-76) of said setup tool (30), **characterized by** the steps of
mounting said setup tool (30) to a reference base (34) having a plurality of base marker positions (60-64) thereon,
probing said reference base marker positions (60-64) using said probe (92) to provide a plurality of digitized base coordinates each corresponding to one of said base marker positions (60-64), said digitized base coordinates orientated to a reference coordinate system,
probing each of said setup tool marker positions (82-88) using said probe (92) to provide a digitized setup tool coordinate for each of said setup tool marker positions (82-88), and
comparing each of said digitized setup tool coordinates to a corresponding reference setup tool coordinate whereby mechanical positional relationship of components (70-76) of said setup tool (30) are verified.

3. The method of claim 2, characterized in that it further comprises the steps of
adjusting one of said components (70-76) of said setup tool (30) in response to said step of comparing a corresponding one of said digitized setup tool coordinates to said corresponding reference setup tool coordinate,
repeating said step of probing said setup tool marker position corresponding to said component of said setup tool adjusted, and
repeating said step of comparing said digitized setup tool coordinate corresponding to said component of said setup tool (30) adjusted to said corresponding reference setup tool coordinate.

4. The method of any one of claims 1 to 3 wherein said setup tool marker positions (82-88) are indicated by holes in said components (70-76) of said setup tool (30) and said base marker positions (60-64) are indicated by holes in said reference base.

5. The method of any one of claims 1 to 4 wherein said plurality of base marker positions (60-64) comprise three spaced base marker positions.

6. The method of any one of claims 1 to 5 wherein said setup tool (30) comprises a sheet metal transfer setup tool.

7. The method of any one of claims 1 to 5 wherein said setup tool (30) comprises an assembly jig.

8. The method of any one of claims 1 to 7 wherein said dimensional coordinate measuring system (10) comprises a three dimensional coordinate measuring system comprising
a movable arm (12) having opposed first and second ends, said arm including a plurality of joints with each joint corresponding to a degree of freedom, each of said joints including a rotational setup tool housing for housing position transducer means, said transducer means producing a position signal,
a support base (14) attached to said first end of said movable arm (12),
said probe (92) attached to said second end of said movable arm (12), and
means (16, 18) for receiving said position signals from said transducer means and providing a digital coordinate corresponding to the position of said probe (92).

9. An apparatus for determining mechanical positional relationships **characterized by**
a setup tool (30) having a plurality of components (70-76) for which mechanical positional relationships are to be determined, each of said components (70-76) having a setup tool marker (82-88) thereon,
a reference base (34) having a plurality of base markers (60-64) thereon, said setup tool (30) disposed on said reference base, and
a dimensional coordinate measuring system position relative to said setup tool (30) and said reference base, said dimensional coordinate measuring system (10) having a probe (92) for measuring said setup tool markers and said base markers.

10. The apparatus of claim 9 characterized in that it further comprises a bracket (32) mounted to said reference base (34), said bracket (32) being receptive to said setup tool (30) for positioning said setup tool (30) on said reference base (34).

11. The apparatus of claim 9 or 10 wherein
each of said setup tool markers (82-88) comprises a hole in a corresponding said component (70-76) of said setup tool (30), and
each of said base markers (60-64) comprises a hole in said base.

12. The apparatus of any one of claims 9 to 11 wherein said plurality of base markers comprise three spaced base markers.

13. The apparatus of any one of claims 9 to 12 wherein said setup tool (30) comprises a sheet metal transfer setup tool.

14. The apparatus of any one of claims 9 to 12 wherein said setup tool (30) comprises an assembly jig.

15. The apparatus of any one of claims 9 to 14 wherein said dimensional coordinate measuring system (10) comprises a three dimensional coordinate measuring system comprising
a movable arm (12) having opposed first and second ends, said arm including a plurality of joints with each joint corresponding to a degree of freedom, each of said joints including a rotational setup tool housing for housing position transducer means, said transducer means producing a position signal,
a support base (14) attached to said first end of said movable arm (12),
said probe (92) attached to said second end of said movable arm (12), and
means (16, 18) for receiving said position signals from said transducer means and providing a digital coordinate corresponding to the position of said probe (92).
